# EUROPÄISCHE PATENTSCHRIFT

(11) **EP 2 324 900 B1**
(45) Veröffentlichungstag und Bekanntmachung des Hinweises auf die Patenterteilung: **26.06.2013**
(21) Anmeldenummer: 10010672.3
(22) Anmeldetag: 25.09.2010
(51) Int. Cl.: B01D 35/027

(54) **Ölfiltereinheit mit integrierter Saugstromaufladung**
Oil filter unit with integrated intake flow charging
Unité de filtre à huile dotée d'un chargement de courant d'aspiration intégré

(30) Priorität: 22.10.2009 DE 102009050330
(43) Veröffentlichungstag der Anmeldung: 25.05.2011
(73) Patentinhaber: IBS Filtran Kunststoff-/Metallerzeugnisse GmbH, 51597 Morsbach (DE)
(72) Erfinder: Boehnke, Kai, 94557 Niederalteich (DE); Rögner, Horst, 88094 Oberteuringen (DE); Huebler, Wolfgang, 88284 Wolpertswende (DE); Schraff, Berthold, 88048 Friederichshafen (DE); Stausberg, Wolfgang, 51597 Morsbach (DE); Dedering, Michael, 51597 Morsbach (DE)
(74) Vertreter: polypatent

(56) Entgegenhaltungen:
- WO-A1-2009/072565
- US-A- 5 728 292

## Beschreibung

Die Erfindung betrifft eine Ölfiltereinheit gemäß dem Oberbegriff des Anspruchs 1. Hierbei handelt es sich insbesondere um eine Saugölfiltereinheit für Getriebe und/oder Verbrennungsmotoren.

Eine gattungsgemäße Ölfiltereinheit ist z. B. aus der DE 10 2007 023 641 A1 bekannt. Eine solche Ölfiltereinheit umfasst ein Ölfiltergehäuse mit einem als Stutzen ausgebildeten Ölauslass und wenigstens in im Innenraum bzw. Gehäuseinneren des Ölfiltergehäuses angeordnetes Filtermedium. Mittels einer am Auslassstutzen anschließbaren als Saugpumpe ausgebildeten Ölpumpe kann durch das Filtermedium hindurch ein Ölvolumenstrom bzw. Filterölvolumenstrom oder auch Frischölvolumenstrom gefördert werden.

Bei hohen Drehzahlen liefert die Saugpumpe jedoch mehr Drucköl bzw. einen höheren Druckölvolumenstrom, als tatsächlich im Getriebe und/oder Verbrennungsmotor benötigt wird. Dies verschlechtert den Wirkungsgrad des Getriebes und/oder des Verbrennungsmotors. Aus dem Stand der Technik ist daher eine sog. Saugstromaufladung bekannt, bei der das überschüssige Drucköl oder zumindest ein Anteil hiervon in den Saugkanal stromaufwärts der Saugpumpe rückgeführt wird. Eine solche Saugstromaufladung ist z. B. in der DE 199 04 911 A1 beschrieben.

Eine Saugstromaufladung an einer Kraftstoffförderpumpe einer Kraftstofffördereinheit eines Kfz ist beispielsweise aus der WO2009/07265 A1 bekannt. Dort wird ein Teil des von der Kraftstoffpumpe geförderten Kraftstoffvolumens in Förderrichtung hinter der Kraftstoffpumpe abgezweigt und dem Saugstrom hinter einem Kraftstofffilter wieder zugeführt.

Aus der US 5,728,292 A ist ein Filter zur Verwendung mit einer in einem Kraftstoffbehälter eingebauten Kraftstoffpumpe beschrieben.

Eine Aufgabe der Erfindung ist es, eine Ölfiltereinheit im Hinblick auf eine solche Saugstromaufladung zu optimieren.

Diese Aufgabe wird gelöst durch eine Ölfiltereinheit gemäß dem Anspruch 1. Hierbei handelt es sich insbesondere um eine Saugölfiltereinheit für Getriebe, bevorzugt für Automatikgetriebe, und/oder Verbrennungsmotoren. Vorteilhafte und bevorzugte Weiterbildungen sind Gegenstand der abhängigen Ansprüche.

Die Lösung der Aufgabe erstreckt sich auch auf eine Ölwanne oder ein Ölwannenteil für ein Getriebe, insbesondere für ein Automatikgetriebe, oder für einen Verbrennungsmotor, umfassend wenigstens eine erfindungsgemäße Ölfiltereinheit. Bevorzugt ist vorgesehen, dass diese Ölwanne oder dieses Ölwannenteil zusammen mit der erfindungsgemäßen Ölfiltereinheit eine Baueinheit bildet. Diese Baueinheit kann auch eine angeschlossene Saugpumpe umfassen.

Die erfindungsgemäße Ölfiltereinheit umfasst ein Ölfiltergehäuse, welches wenigstens einen mit einer Saugpumpe verbindbaren bzw. an diese Saugpumpe strömungstechnisch anbindbaren Saugkanal umfasst. Mittels der Saugpumpe kann ein von einem Filtermedium im Innenraum des Ölfiltergehäuses gereinigter Filterölvolumenstrom bzw. Frischölvolumenstrom durch den Saugkanal angesaugt werden.

Erfindungsgemäß ist vorgesehen, dass die Ölfiltereinheit eine Rückführungseinrichtung zur Saugstromaufladung aufweist, mittels derer ein rückgeführter Druckölvolumenstrom in den Saugkanal einspeisbar ist, um sich dort mit einem aus dem Innenraum des Ölfiltergehäuses kommenden Filterölvolumenstrom zu vermischen. Bei dem rückgeführten Druckölvolumenstrom handelt es sich um einen stromabwärts der Saugpumpe oder unmittelbar an der Saugpumpe abgezweigten Ölvolumenstrom, der gegenwärtig im Getriebe und/oder im Verbrennungsmotor nicht benötigt wird. Der rückgeführte Druckölvolumenstrom und der Filterölvolumenstrom bilden zusammen den an der Saugseite bzw. am Eingang der Saugpumpe anstehenden Saugölvolumenstrom.

Damit wiederum wird der Ölbedarf des Getriebes und/oder des Verbrennungsmotors gedeckt von einem Anteil (Filterölvolumenstrom bzw. Frischölvolumenstrom) der über das Filtermedium unter Druckverlust aus einem Ölsumpf gefördert wird und einem Anteil aus der Rückführung (rückgeführter Druckölvolumenstrom) der nicht gefiltert zu werden braucht. Der druckverlustbehaftete Filterölvolumenstrom kann damit geringer ausfallen, wodurch die Filterfläche des Filtermediums reduziert und auch das Ölfiltergehäuse kleiner dimensioniert werden kann. Ein weiterer Vorteil der Saugdruckaufladung ist darin zu sehen, dass der Öldruck am Eingang der Saugpumpe so stark erhöht wird, dass über den gesamten Drehzahlbereich keine Kavitation (Bildung und Auflösung von Flüssigkeitshohlräumen) entsteht, wodurch die Funktionssicherheit und die Lebensdauer der Saugpumpe erhöht wird.

Durch die erfindungsgemäße Integration bzw. Einbindung einer Rückführungseinrichtung zur Saugstromaufladung in die Ölfiltereinheit werden zahlreiche mit dem Stand der Technik einhergehende Nachteile behoben. In vorteilhafter Weise wird z. B. die Anzahl der Bauteile reduziert, wobei aufgrund der Bauteilintegration und dem reduzierten Montageaufwand auch ein Kostenvorteil entsteht. Ein weiterer Vorteil ist in der Reduzierung von Dichtstellen zu sehen, was die Funktionssicherheit erhöht (gehobene Sicherheit gegen Leckagen), wobei eine Reduzierung von Dichtelemente auch zur Kostenersparnis beiträgt. Ein weiterer Vorteil ist auch darin zu sehen, dass die Ölfiltereinheit mit der Saugpumpe vormontiert werden kann, ggf. unter Einbringung in eine Ölwanne, und dass eine solche Baueinheit insbesondere herstellerseitig geprüft werden kann, wodurch die Qualität verbessert wird und sich die Montagekosten beim Kunden verringern. Ferner ergeben sich neue konstruktive Gestaltungs- und Anordnungsmöglichkeiten mit denen vorhandener Bauraum besser genutzt werden kann.

Gemäß einer bevorzugten Weiterbildung ist vorgesehen, dass das Ölfiltergehäuse der Ölfiltereinheit wenigstens einen Rückführungskanal zur Durchleitung des rückgeführten Druckölvolumenstroms umfasst.

Gemäß einer bevorzugten Weiterbildung ist vorgesehen, dass der Rückführungskanal als Bestandteil und bevorzugt als integraler Bestandteil des Ölfiltergehäuses ausgebildet ist, wobei dieser Rückführungskanal zum Innenraum des Ölfiltergehäuses durch wenigstens eine Trennwand abgegrenzt ist, so dass kein Öl vom Rückführungskanal in den Innenraum des Ölfiltergehäuses übertreten kann. Bevorzugt ist der Rückführungskanal in die Gehäusewandung integriert.

Diese Trennwand kann einstückig mit dem Rückführungskanal oder mit dem Ölfiltergehäuse ausgebildet sein. Gemäß einer bevorzugten Weiterbildung ist jedoch vorgesehen, dass die Trennwand als wenigstens ein separater Deckel ausgebildet ist. Insbesondere ist vorgesehen, dass dieser Deckel auf einer Außenseite bevorzugt jedoch auf der Innenseite des Ölfiltergehäuses (bspw. an einer Filteroberschale oder auch an einer Filterunterschale des Ölfiltergehäuses) mittels eines geeigneten Verbindungsverfahrens wie Schweißen (Laserschweißen, Vibrationsreibschweißen etc.) oder Kleben öldicht angebracht ist.

Gemäß einer bevorzugten Weiterbildung ist vorgesehen, dass der Rückführungskanal an einer Filteroberschale des Ölfiltergehäuses angeordnet und bevorzugt einstückig mit dieser Filteroberschale ausgebildet ist. Bevorzugt ist der Rückführungskanal in die Gehäusewandung der Filteroberschale integriert. Zum Innenraum des Ölfiltergehäuses ist der Rückführungskanal durch eine Trennwand bzw. durch einen Deckel abgetrennt, wie zuvor erläutert. Ebenso kann der Rückführungskanal auch an einer Filterunterschale angeordnet sein.

Gemäß einer bevorzugten Weiterbildung ist vorgesehen, dass am Strömungsende des Rückführungskanals eine Düseneinrichtung angeordnet ist, mittels derer der rückgeführte Druckölvolumenstrom definiert in den Saugkanal einspeisbar ist. Unter einem definierten Einspeisen wird insbesondere eine definierte Strömungsrichtung und/oder ein definierter Strömungsquerschnitt und/oder eine definierte Strömungsgeschwindigkeit des in den Saugkanal eingespeisten Druckölvolumenstroms verstanden. Insbesondere verengt die Düseneinrichtung den Austrittsquerschnitt des Rückführungskanals, wodurch der austretende rückgeführte Druckölvolumenstrom beschleunigt wird. Anstelle einer Düseneinrichtung kann auch eine funktionsähnliche Engstelle oder dergleichen vorgesehen sein. Bevorzugt ist die Düseneinrichtung.oder die Engstelle einstückig mit dem Filtergehäuse bzw. der Filteroberschale oder der Filterunterschale ausgebildet.

Gemäß einer bevorzugten Weiterbildung ist vorgesehen, dass der Rückführungskanal in einen Auslassstutzen mündet, welcher zum Anschluss der Ölfiltereinheit an die Saugpumpe vorgesehen ist, und durch welchen sich zumindest abschnittsweise der Saugkanal hindurch erstreckt. Bevorzugt ist der Auslassstutzen ein Bestandteil des Ölfiltergehäuses und ist insbesondere einstückig mit diesem ausgebildet, insbesondere mit einer Filteroberschale. Mittels des Auslassstutzens kann die Ölfiltereinheit unmittelbar oder mittelbar (bspw. mittels eines Adapters) an die Saugpumpe angeschlossen werden. Der sich durch den Auslassstutzen hindurch erstreckende Saugkanal kann axial länger als der von außen sichtbare Auslassstutzen sein und z. B. in den Innenraum des Ölfiltergehäuses hineinragen.

Gemäß einer bevorzugten Weiterbildung ist vorgesehen, dass an der Außenwandung des Auslassstutzens wenigstens eine Befestigungseinrichtung, insbesondere mit einer Befestigungsöse, angeordnet ist. Diese Befestigungseinrichtung ist bevorzugt im Bereich eines saugpumpenseitigen Anschlussflansches des Auslassstutzens angeordnet und dient dazu, den aufgrund der Durchmischung von Filterölvolumenstrom und rückgeführten Druckölvolumenstrom zuweilen stark fluidmechanisch beanspruchten Auslassstutzen, insbesondere an seinem vom Ölfiltergehäuse wegweisenden axialen Ende, befestigen und somit mechanisch abstützen zu können.

Gemäß einer bevorzugten Weiterbildung ist vorgesehen, dass im Saugkanal Strömungsleitelemente und/oder Mischelemente angeordnet sind. Diese Elemente dienen insbesondere zur effektiven Strömungsleitung des Filterölvolumenstroms und/oder des rückgeführten Druckölvolumenstroms, sowie zu deren effektiven Durchmischung.

Die Erfindung wird nachfolgend beispielhaft anhand der Figuren näher erläutert. Es zeigen:
- Fig. 1:: eine erfindungsgemäße Ölfiltereinheit in einer perspektivischen Oberansicht;
- Fig. 2:: die Filtereinheit der Fig. 1 in einer Draufsicht;
- Fig. 3: eine Schnittansicht durch die Filtereinheit der Fig. 1 gemäß dem in Fig. 2 angegebe- nen Schnittverlauf A-A;
- Fig. 4: eine weitere Schnittansicht durch die Filtereinheit der Fig. 1 gemäß dem in Fig. 2 angegebenen Schnittverlauf B-B; und
- Fig. 5: eine Detaildarstellung mit Einblick in den Auslassstutzen der Ölfiltereinheit aus Fig. 1.

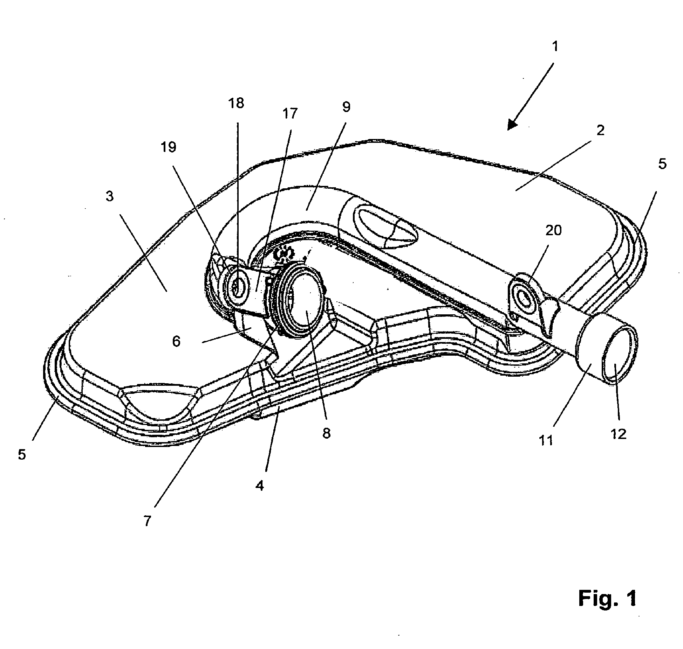

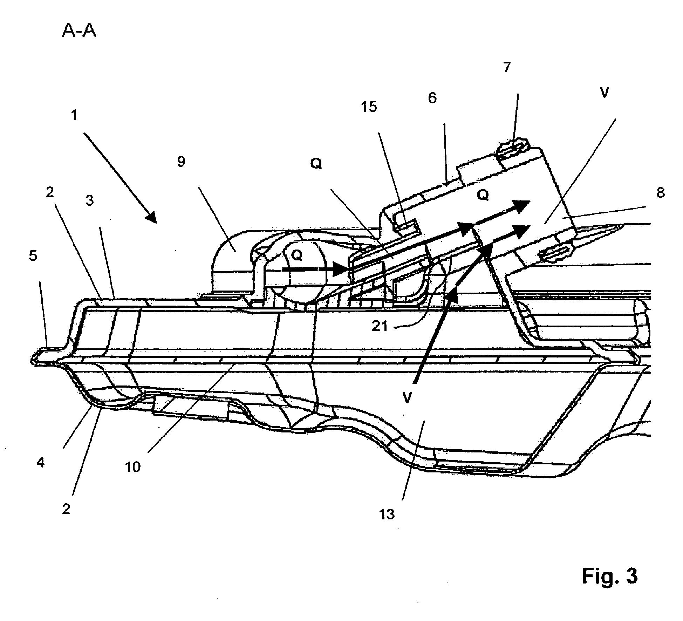

Fig. 1 zeigt eine insgesamt mit 1 bezeichnete Ölfiltereinheit. Eine solche Ölfiltereinheit 1 ist z. B. in einer Ölwanne eines Getriebes und/oder eines Verbrennungsmotors anordenbar. Die Ölfiltereinheit 1 weist ein Ölfiltergehäuse 2 auf, welches aus einer Filteroberschale 3 und aus einer Filterunterschale 4 gebildet ist, die einen Innenraum umschreiben, in dem ein Filtermedium 10 (vgl. Fig. 3) zur Filtration von Öl angeordnet ist. Die Filteroberschale 3 und die Filterunterschale 4 sind an einem umlaufenden Verbindungsflansch 5 öldicht miteinander verbunden. An der Filteroberschale 3 ist ein einstückig mit dieser ausgebildeter Auslassstutzen 6 angeordnet, mittels dem die Ölfiltereinheit 1 an eine Saugpumpe anschließbar ist. Zum direkten oder auch mittelbaren Anschluss an die Saugpumpe weist der Auslassstutzen 6 einen saugpumpenseitigen Anschlussflansch 7 auf, an dem diverse Dichtelemente vorgesehen sein können. Durch den Auslassstutzen 6 erstreckt sich ein Saugkanal 8, durch den hindurch ein Saugölvolumenstrom gefördert bzw. hindurch gesaugt werden kann.

Die Ölfiltereinheit 1 umfasst eine Rückführungseinrichtung zur Saugstromaufladung, mittels derer ein von der Saugpumpe zwar geförderter jedoch aktuell im Getriebe und/oder im Verbrennungsmotor nicht benötigter Druckölvolumenstrom (siehe hierzu die obenstehenden Ausführungen) in den Saugkanal 8 rückführbar ist, wie nachfolgend erläutert.

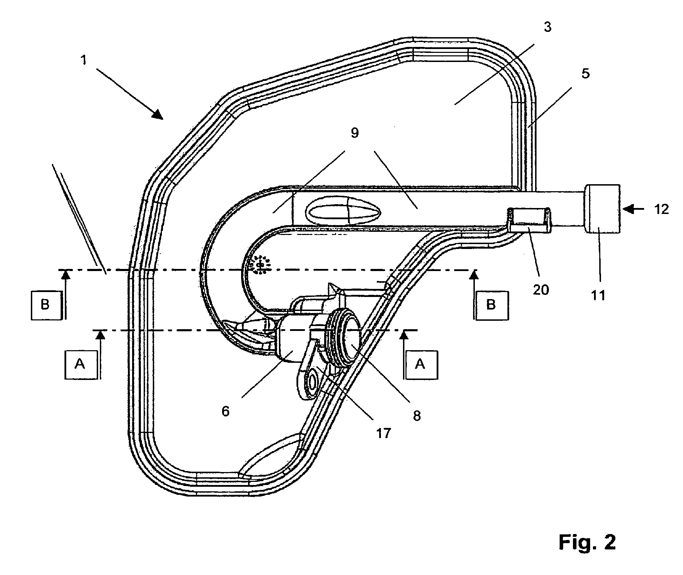

Die Filteroberschale 3 des Ölfiltergehäuses 2 umfasst einen in der Gehäusewandung integrierten Rückführungskanal 9 zur Durchleitung eines solchen rückgeführten Druckölvolumenstroms. Der Rückführungskanal 9 weist einen druckseitigen Anschlussflansch 11 mit einer Öleintrittsöffnung 12 auf, durch die hindurch der rückgeführte Druckölvolumenstrom in den Rückführkanal 9 einströmt. An seinem Strömungsende mündet der Rückführungskanal 9 in den Auslassstutzen 6. Dazwischen weist der Rückführungskanal 9 einen U-förmiger Verlauf auf, wie sehr gut auch aus der Fig. 2 ersichtlich.

Fig. 3 zeigt in einer Schnittansicht die Einspeisung des durch den Rückführungskanal 9 rückgeführten Druckölvolumenstroms in den sich durch den Auslassstutzen 6 erstreckenden Saugkanal 8. Der rückgeführte Druckölvolumenstrom ist schematisch mit den Pfeilen Q dargestellt. Ein aus dem Ölsumpf 13 durch das Filtermedium 10 angesaugter Filterölvolumenstrom ist schematisch mit den Pfeilen V dargestellt. Wie gezeigt, wird der von der Saugpumpe rückgeführte Druckölvolumenstrom Q in den Saugkanal 8 eingespeist und vermischt sich dort mit dem Filterölvolumenstrom V, wobei die hohe kinetische Energie des rückgeführten Druckölvolumenstroms Q teilweise auf den energieärmeren Filterölvolumenstrom V .übertragen wird. Der durch den Saugkanal 8 angesaugte Saugölvolumenstrom setzt sich somit aus dem rückgeführten Druckölvolumenstrom Q und dem Filterölvolumenstrom V zusammen.

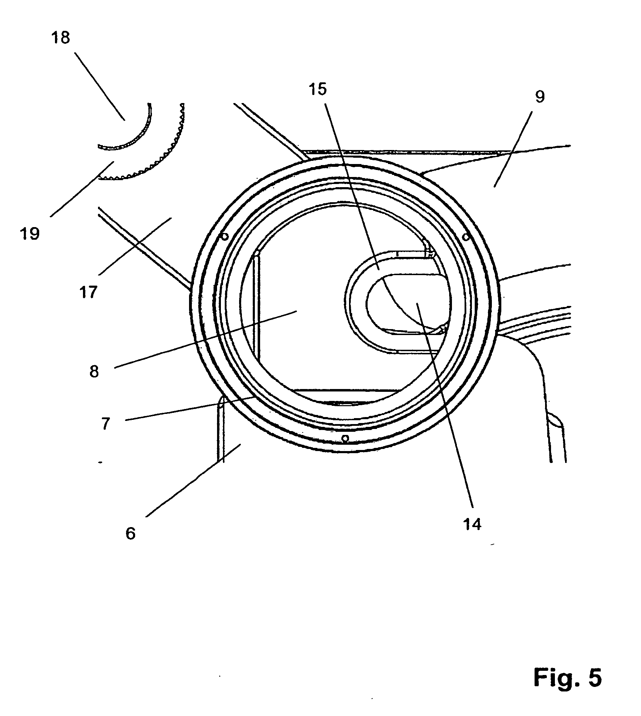

Eine Energieübertragung von dem rückgeführten Druckölvolumenstrom Q auf den Filterölvolumenstrom V erfolgt insbesondere dadurch, dass der rückgeführte Druckölvolumenstrom Q den Filterölvolumenstrom V quasi mitreißt und beschleunigt. Um diesen Effekt zu unterstützen ist am Strömungsende des Rückführungskanals 9 eine Düseneinrichtung 15 angeordnet. Die Düseneinrichtung 15 verengt die Ölaustrittsöffnung 14 (vgl. Fig. 5) des Rückführungskanals 9, so dass der rückgeführte Druckölvolumenstrom Q beim Eintritt in den Saugkanal 8 beschleunigt wird. Mittels der Düseneinrichtung 15 werden zudem die Strömungsrichtung und der Strömungsquerschnitt des rückgeführten Druckölvolumenstroms Q beim Eintritt in den Saugkanal 8 definiert. Wie gezeigt wird die Strömungsrichtung des Druckölvolumenstroms Q bevorzugt in axialer Längserstreckungsrichtung des Saugkanals 8 ausgerichtet. Im Saugkanal 8 sind ferner Strömungsleitelemente 21 angeordnet. In vergleichbarer Weise können auch Mischelemente und/oder mechanisch stabilisierende Innenrippen vorgesehen sein.

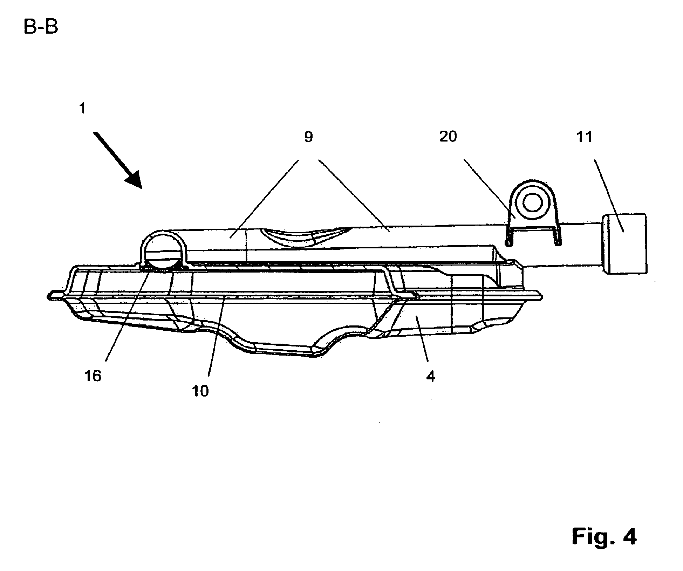

Fig. 4 zeigt in einer Schnittansicht, dass der einstückig mit der Filteroberschale 3 ausgebildete Rückführungskanal 9 durch eine als Deckel 16 ausgebildete Trennwand zum Innenraum des Ölfiltergehäuses 2 öldicht abgrenzt ist, so dass kein Öl vom Rückführungskanal 9 in den Innenraum des Ölfiltergehäuses abfließen kann und um sicherzustellen, dass der rückgeführte Druckölvolumenstrom vollständig in den Saugkanal 8 eingeleitet werden kann. Der Deckel 16 ist von der Innenseite der Filteroberschale 3 angebracht und ist durch eine Schweiß- und/oder Klebeverbindung dauerhaft befestigt. Die Strömungswandung des Rückführungskanals 9 wird somit zu einem Teil von der Filteroberschale 3 und zum anderen Teil von dem Deckel 16 bzw. der Trennwand gebildet.

Am Auslassstutzen 6 ist eine Befestigungseinrichtung 17 mit einer Befestigungsöse 18 angebracht (vgl. **Fig. 1** u. **Fig. 2**), mittels derer die gesamte Ölfiltereinheit 1 befestigbar ist, die jedoch insbesondere auch dazu dient, die im Saugkanal 8 wirksamen fluidmechanischen Kräfte über eine Befestigung des Auslassstutzens 6 abzufangen. Die Befestigungsöse 18 umfasst z. B. eine umspitzte Hülse. Eine weitere Befestigungseinrichtung 20 ist im Bereich des druckseitigen Anschlussflansches 11 des Rückführungskanals 9 angeordnet.

Fig. 5 zeigt den saugpumpenseitigen Anschlussflansch 7 des Auslassstutzens 6 mit Einblick in den Saugkanal 8. In dieser Darstellung ist sehr gut die von der Düseneinrichtung 15 verengte Ölaustrittsöffnung 14 des Rückführungskanals 9 und deren Größenverhältnis zum gesamten Querschnitt des Saugkanals 8 ersichtlich.

Bevorzugt sind die Filteroberschale 3 und/oder die Filterunterschale 4 jeweils einstückig aus einem ölfesten Kunststoffmaterial gebildet und insbesondere in einem Kunststoff-Spritzgussverfahren hergestellt.

## Patentansprüche

1. Ölfiltereinheit (1), insbesondere Saugölfiltereinheit für Getriebe oder für Verbrennungsmotoren, mit einem Ölfiltergehäuse (2), welches wenigstens einen mit einer Saugpumpe verbindbaren Saugkanal (8) umfasst, **dadurch gekennzeichnet, dass** die Ölfiltereinheit (1) eine Rückführungseinrichtung zur Saugstromaufladung aufweist, mittels derer ein rückgeführter Druckölvolumenstrom (Q) in den Saugkanal (8) einspeisbar ist, das Ölfiltergehäuse (2) wenigstens einen Rückführkanal (9) für den rückgeführten Druckölvolumenstrom (Q) umfasst, und dass der Rückführungskanal (9) als Bestandteil des Ölfiltergehäuses (2) ausgebildet ist, um zum Innenraum des Ölfiltergehäuses (2) durch wenigstens eine Trennwand abgegrenzt ist.

2. Ölfiltereinheit (1) nach Anspruch 1, **dadurch gekennzeichnet, dass** die Trennwand als wenigstens ein Deckel (16) ausgebildet ist.

3. Ölfiltereinheit (1) nach einem der Ansprüche 1 oder 2, **dadurch gekennzeichnet, dass** der Rückführungskanal (9) an einer Filteroberschale (3) des Ölfiltergehäuses (2) angeordnet ist.

4. Ölfiltereinheit (1) nach einem der Ansprüche 1 bis 3, **dadurch gekennzeichnet, dass** am Strömungsende des Rückführkanals (9) eine Düseneinrichtung (15) angeordnet ist, mittels derer der rückgeführte Druckölvolumenstrom (Q) definiert in den Saugkanal (8) einspeisbar ist.

5. Ölfiltereinheit (1) nach einem der Ansprüche 1 bis 4, **dadurch gekennzeichnet, dass** der Rückführungskanal (9) in einen Auslassstutzen (6) mündet, welcher zum Anschluss der Ölfiltereinheit (1) an die Saugpumpe vorgesehen ist und durch welchen sich zumindest abschnittsweise der Saugkanal (8) hindurch erstreckt.

6. Ölfiltereinheit (1) nach Anspruch 5, **dadurch gekennzeichnet, dass** der Auslassstutzen (6) sich über den Saugkanal (8) hinaus erstreckt.

7. Ölfiltereinheit (1) nach Anspruch 6, **dadurch gekennzeichnet, dass** an der Außenwandung des Auslassstutzens (6) wenigstens eine Befestigungseinrichtung (17) angeordnet ist.

8. Ölfiltereinheit (1) nach Anspruch 7, **dadurch gekennzeichnet, dass** die Befestigungseinrichtung (17) im Bereich eines saugpumpenseitigen Anschlussflansches (7) des Auslassstutzens (6) angeordnet ist.

9. Ölfiltereinheit (1) nach einem der vorausgehenden Ansprüche, **dadurch gekennzeichnet, dass** im Saugkanal (8) Strömungsleitelemente (21) und/oder Mischelemente angeordnet sind.

10. Ölwanne oder Ölwannenteil für ein Getriebe, insbesondere Automatikgetrieben, oder einen Verbrennungsmotor, umfassend eine Ölfiltereinheit (1) gemäß einem der vorausgehenden Ansprüche.

## Claims

1. Oil filter unit (1), in particular an intake oil filter unit for gearboxes or for internal combustion engines, having an oil filter housing (2) which comprises at least one intake duct (8) that can be connected to an intake pump, **characterised in that** the oil filter unit (1) has a recirculating apparatus for charging the intake flow, by means of which apparatus a recirculated volume flow (Q) of pressurised oil can be fed into the intake duct (8), the oil filter housing (2) comprises at least one recirculating duct (9) for the recirculated volume flow (Q) of pressurised oil, and that the recirculating duct (9) is constructed as a component part of the oil filter housing (2), and is separated off from the inner compartment of said oil filter housing (2) by at least one dividing wall.

2. Oil filter unit (1) according to claim 1, **characterised in that** the dividing wall is constructed as at least one cover (16).

3. Oil filter unit (1) according to either of claims 1 or 2, **characterised in that** the recirculating duct (9) is arranged on a filter upper shell (3) of the oil filter housing (2).

4. Oil filter unit (1) according to one of claims 1 to 3, **characterised in that** there is arranged, at the flow end of the recirculating duct (9), a nozzle apparatus (15) by means of which the recirculated volume flow (Q) of pressurised oil can be fed into the intake duct (8) in a defined manner.

5. Oil filter unit (1) according to one of claims 1 to 4, **characterised in that** the recirculating duct (9) opens into an outlet connection piece (6) which is provided for the purpose of connecting the oil filter unit (1) to the intake pump and through which the intake duct (8) extends, at least in certain sections.

6. Oil filter unit (1) according to claim 5, **characterised in that** the outlet connection piece (6) extends beyond the intake duct (8).

7. Oil filter unit (1) according to claim 6, **characterised in that** at least one fastening apparatus (17) is arranged on the outer wall of the outlet connection piece (6).

8. Oil filter unit (1) according to claim 7, **characterised in that** the fastening apparatus (17) is arranged in the region of a connecting flange (7) on the intake pump side of the outlet connection piece (6).

9. Oil filter unit (1) according to one of the preceding claims, **characterised in that** flow-guiding elements (21) and/or mixing elements are arranged in the intake duct (8).

10. Oil sump or oil sump part for a gearbox, in particular automatic gearboxes, or an internal combustion engine, comprising an oil filter unit (1) according to one of the preceding claims.

## Revendications

1. Unité de filtre à huile (1), plus particulièrement unité de filtre à huile aspirante pour transmissions ou pour moteurs à combustion, avec un boîtier de filtre à huile (2) qui comprend au moins un canal d'aspiration (8) pouvant être relié à une pompe d'aspiration, **caractérisée en ce que** l'unité de filtre à huile (1) comprend un dispositif de retour pour la suralimentation à flux d'aspiration, à l'aide duquel un flux volumique d'huile sous pression (Q) de retour peut être introduit dans le canal d'aspiration (8), le boîtier de filtre à huile (2) comprend au moins un canal de retour (9) pour le flux volumique d'huile sous pression (Q) de retour, et **en ce que** le canal de retour (9) fait partie intégrante du boîtier de filtre à huile (2) et est séparé de l'intérieur du boîtier de filtre à huile (2) par au moins une cloison.

2. Unité de filtre à huile (1) selon la revendication 1, **caractérisée en ce que** la cloison est conçue au moins comme un couvercle (16).

3. Unité de filtre à huile (1) selon l'une des revendications 1 ou 2, **caractérisée en ce que** le canal de retour (9) est disposé sur une coque supérieure de filtre (3) du boîtier de filtre à huile (2).

4. Unité de filtre à huile (1) selon l'une des revendications 1 à 3, **caractérisée en ce que**, à l'extrémité d'écoulement du canal de retour (9), se trouve un dispositif à buse (15), à l'aide duquel le flux volumique d'huile sous pression (Q) de retour peut être introduit de manière définie dans le canal d'aspiration (8).

5. Unité de filtre à huile (1) selon l'une des revendications 1 à 4, **caractérisée en ce que** le canal de retour (9) débouche dans un manchon d'évacuation (6) qui est prévu pour le raccordement de l'unité de filtre à huile (1) à la pompe d'aspiration et à travers lequel s'étend, au moins partiellement, le canal d'aspiration (8).

6. Unité de filtre à huile (1) selon la revendication 5, **caractérisée en ce que** le manchon d'évacuation (6) s'étend au-delà du canal d'aspiration (8).

7. Unité de filtre à huile (1) selon la revendication 6, **caractérisée en ce que**, sur la paroi extérieure du manchon d'évacuation (6) se trouve au moins un dispositif de fixation (17).

8. Unité de filtre à huile (1) selon la revendication 7, **caractérisée en ce que** le dispositif de fixation (17) se trouve au niveau d'une bride de raccordement (7) du manchon d'évacuation (6), située du côté de la pompe d'aspiration.

9. Unité de filtre à huile (1) selon l'une des revendications précédentes, **caractérisée en ce que**, dans le canal d'aspiration (8) se trouvent des éléments de conduction d'écoulement (21) et/ou des éléments de mélange.

10. Bac à huile ou partie de bac à huile pour une transmission, plus particulièrement des transmissions automatiques, ou un moteur à combustion, comprenant une unité de filtre à huile (1) selon l'une des revendications précédentes.
